# EUROPEAN PATENT SPECIFICATION

(11) **EP 2 542 094 B1**
(45) Date of publication and mention of the grant of the patent: **18.02.2015**
(21) Application number: 10708638.1
(22) Date of filing: 03.03.2010
(51) Int. Cl.: A23F 5/12, A23F 5/14, A23F 5/46

(54) **AN INSTANT COFFEE WITH COFFEE GROUNDS**
INSTANTKAFFEE MIT KAFFEEMEHL
CAFÉ INSTANTANÉ AVEC MARC DE CAFÉ

(43) Date of publication of application: 09.01.2013
(73) Proprietor: Orgen Gida Sanayi Ticaret Anonim Sirketi, Guzelbahce 35317 Izmir (TR)
(72) Inventor: ORGEN, Bulend, 35317 Izmir (TR); GERNI, Kadriye, 35317 Izmir (TR)
(74) Representative: Dericioglu, E. Korhan
(86) International application number: PCT/IB2010/050909
(87) International publication number: WO 2011/107827

(56) References cited:
- WO-A1-2007/116350
- DE-A1- 3 130 346
- FR-A1- 2 211 184
- GR-A- 96 100 136
- US-A- 4 594 256
- US-A1- 2004 265 449
- Anonymous: "Turkish Coffee Recipes"[Online] March 2009 (2009-03), XP002610028 Turkish Coffee Blog Retrieved from the Internet: URL:http://www.turkishcoffeeblog.com/2009/ 03/turkish-coffee-recipes.html> [retrieved on 2010-11-17]

## Description

### Field of the Invention

The present invention relates to an instant coffee, which, when boiling water is added thereon, becomes ready to drink with coffee grounds and foam, enabling the user to enjoy traditional Turkish coffee appearance, texture and taste.

### Background of the Invention

In the production of instant coffee, firstly the coffee beans are roasted. The coffee beans, which are ground after they are roasted, are then placed in percolators. They are cooked with hot water whereby the coffee concentrate is enabled to pass to the water. Then the water therein is evaporated whereby coffee extract is obtained. This coffee concentrate is dried by spray-drying or freeze-drying techniques and processed into instant coffee. With this process, an instant coffee which is 100% soluble in water is obtained.

In order to remove the water within the coffee extract basically two methods are used. One of these methods is freeze drying while the other is spray drying the coffee.

In the freeze drying technique, the basic principle is the removal of water by sublimation. The coffee extract is frozen approximately to minus forty degrees Celsius and the water remaining therein is enabled to crystallize at this temperature. The crystallized water is removed from the coffee by using sublimation method.

In the spray drying method, the coffee concentrate is sprayed from the drying towers. When the coffee extract contacts air with high temperature, the water remaining therein evaporates at high temperature. However, the fact that the coffee extract contacts the high temperature wall may affect negatively the oils within the coffee and cause the coffee flavor to deteriorate.

The United States patent document US4594256discloses a method for producing agglomerated instant coffee. With the said method, instant coffee having a roasted and ground appearance can be obtained. In the said method, the dried coffee which is obtained by spraying is first ground into powder of an average particle size of 27 to 75 microns. Then in order for the powder particles to bind together cohesiveness of the powder is adjusted. By the way of wetting the grounds to bind together, the coffee grounds vanish. Than the binded coffee bean is filtered. In the next step, regular shaped and loosely bound lumps having a size of 800 to 2100 microns are obtained from the cohesive adjusted powder. The outer surfaces of the lumps are fused to a depth of 5 to 30 microns and the fused lumps are dried and screened to produce an agglomerated instant coffee having a density of 0.20 to 0.28 gms/cc. The said agglomerate size may vary from 800 to 1300 microns. Thus consumers enjoy their instant coffee without coffee grounds.

In the said United States patent document, coffee that is 100% soluble in water (spray-dried) is used in production of instant coffee. Therefore the said instant coffee does not leave any coffee grounds when it is prepared and a 100% soluble instant coffee is obtained. Furthermore oil is used during agglomeration process in the invention disclosed in the said document.

The United States patent document US2004265449discloses a method for producing non-segregating flavored coffee. The flavored coffee content is about 80% to 99.5% on dry matter. Preferably the content is between 92% and 96%. The said coffee comprises roasted and ground coffee component, an instant coffee component or a mixture thereof.

The coffee obtained in the invention disclosed in the United States patent document US2004265449 is mixed with water and filtered to be consumed without coffee grounds or foam.

PCT Patent Application 2007/116350 discloses an instant Turkish coffee product comprising soluble coffee, Turkish coffee, coffee whitener and edible foam forming agent.

### Summary of the Invention

The objective of the present invention is to realize an instant coffee with coffee grounds which does not completely dissolve when prepared and whose solubility rate is 25% to 50% by weight.

Another objective of this invention is to realize an instant coffee with long shelf life.

A further objective of this invention is to realize an instant coffee which has foam when it is prepared.

### Detailed Description of the Invention

The instant coffee essentially comprises
65% to 97.5% on dry matter of roasted and ground coffee beans and
2.0% to 2.5% on dry matter of flavoring substance,
and is obtained by a production method comprising the steps of
- roasting the coffee beans, mixing the roasted coffee beans with the other materials (flavor and optionally sugar)
- grinding the obtained mixture,
- agglomerating the ground mixture,
- drying the agglomerated mixture, and
- cooling the dried mixture.

In the production method of the instant coffee, firstly the coffee beans are roasted to obtain the desired taste. In the preferred embodiment of the invention, Arabica coffee beans are used After the coffee beans are roasted, the roasted coffee beans, and the flavoring substance and optionally sugar that are prepared in advance are mixed together. The mixing process is carried out in mixer which has shovels rotate as mixing elements on the mixer shaft in a horizontal, cylindrical drum. Mixing process continues for approximately three minutes; thus a homogeneous mixture is obtained. The obtained homogeneous mixture is later ground to be processed into small sizes. The grinding process continues until the particle size becomes approximately 10 to 90 microns. When the particles reach the desired size the obtained mixture is agglomerated. In the preferred embodiment of the invention, the agglomeration process is carried out at a temperature of 100° to 200°C under 50 to 150 kg/h steam. The agglomeration process approximately takes 0.3 to 1 minute. Following the agglomeration process the obtained mixture is taken to drying. The mixture is preferably dried to 5% moisture on dry matter. The coffee mixture, which is dried and cooled to 30° to 40°C, is later packaged in a nitrogen gas medium.

As there is not a wetting process between the milling and agglomeration, the coffee grounds do not vanish in the production method of the instant Turkish coffee.

The flavoring substance comprises natural extracts, volatile oils, nature-identical flavoring substances used as flavoring agents, maltodextrin used as a carrier, thickener agents enabling binding together, milk powder, stabilizer which ensures stability of the mixture, emulsifying salt and anticaking agent.

In the preferred and alternative embodiments of the invention, disodium phosphate is used as the emulsifying salt and silicon dioxide is used as the anticaking agent in the flavoring substance.

In the preferred and alternative embodiments of the invention, coffee oil, mastic oil, coconut oil, almond oil, hazelnut oil, cocoa oil, mint oil, fruit oil is used as the volatile oils in the flavor.

In the preferred embodiment of the invention, the flavoring substance in the instant coffee is Turkish delight *(lokum)* flavor. The Turkish delight flavor comprises natural extracts, volatile oils, naturel identical Turkish delight flavor, maltodextrin, glucose, gum arabic, milk powder, stabilizer, emulsifying salt and anticaking agent.

In the alternative embodiments of the invention, the flavoring substance in the instant coffee may be mastic flavor, coconut flavor, almond flavor, hazelnut flavor, cardamom flavor, chocolate flavor, mint flavor or fruit flavors.

The mastic flavor used in the alternative embodiment of the invention comprises natural extracts, volatile oils, nature-identical mastic flavor, maltodextrin, glucose, gum arabic, milk powder, stabilizer, emulsifying salt and anticaking agent.

The coconut flavor used in the alternative embodiment of the invention comprises natural extracts, volatile oils, nature-identical coconut flavor, coconut oil, maltodextrin, glucose, gum arabic, milk powder, stabilizer, emulsifying salt and anticaking agent.

The almond flavor used in the alternative embodiment of the invention comprises natural extracts, volatile oils, nature-identical almond flavor, maltodextrin, glucose, gum arabic, milk powder, stabilizer, emulsifying salt and anticaking agent.

The hazelnut flavor used in the alternative embodiment of the invention comprises natural extracts, volatile oils, nature-identical hazelnut flavor, maltodextrin, glucose, gum arabic, milk powder, stabilizer, emulsifying salt and anticaking agent.

The cardamom flavor used in the alternative embodiment of the invention comprises natural extracts, volatile oils, nature-identical cardamom flavor, maltodextrin, glucose, gum arabic, milk powder, stabilizer, emulsifying salt and anticaking agent.

The chocolate flavor used in the alternative embodiment of the invention comprises cocoa powder, natural extracts, volatile oils, nature-identical chocolate flavor, maltodextrin, glucose, gum arabic, milk powder, stabilizer, emulsifying salt and anticaking agent.

The mint flavor used in the alternative embodiment of the invention comprises natural extracts, volatile oils, nature-identical mint flavor, maltodextrin, glucose, gum arabic, milk powder, stabilizer, emulsifying salt and anticaking agent.

The fruit flavors used in the alternative embodiment of the invention comprises natural extracts, volatile oils, nature-identical fruit flavor, maltodextrin, glucose, gum arabic, milk powder, stabilizer, emulsifying salt and anticaking agent.

The inventive instant coffee may further comprise a foaming agent which enables the coffee that is prepared to be foamy. The foaming agent is obtained by special processing of the membrane located on the coffee bean. The foaming agent is present in the instant coffee in an amount of 0.5% to 2.0% on dry matter.

In one embodiment of the invention, the foaming agent is provided in the flavoring substance.

In one embodiment of the invention the instant coffee comprises sugar. In the said embodiment, the instant coffee comprises 20% to 30% on dry matter of sugar.

In the preferred embodiment of the invention, packaging process is carried out for single use. In order for the coffee mixture placed into the package not to deteriorate during the shelf life, packaging is carried out under nitrogen gas. In order to prevent the coffee from contacting with oxygen, nitrogen gas is pumped into the package during packaging and the air with oxygen present in the package is ensured to be discharged. Then the mixture is filled into the air evacuated package.

In the instant coffee production method, owing to the fact that the coffee is not filtered; when the coffee is prepared by the user by pouring hot water onto the coffee, the coffee is ensured to have coffee grounds and foam. This way the user is ensured to enjoy traditional Turkish coffee appearance, texture and taste.

Within the framework of these basic concepts, it is possible to develop a wide variety of embodiments of the inventive "An Instant Coffee and Production Method Thereof".

## Claims

1. An instant coffee with coffee grounds and foam **characterized by** 65% to 97.5% on dry matter of roasted and ground coffee beans and 2.0% to 2.5% on dry matter of flavoring substance obtained by a production method
comprising the steps of
- roasting the coffee bean,
- mixing the roasted coffee bean with the other materials
- grinding the obtained mixture,
- agglomerating the ground mixture,
- drying the agglomerated mixture and
- cooling the dried mixture.

2. A production method for obtaining an instant coffee according to Claim 1, comprising the step of packaging the cooled powder in a nitrogen gas medium.

3. An instant coffee according to Claims 1 or 2, **characterized by** a production method comprising a packaging step for single use packages realized under nitrogen gas.

4. An instant coffee according to Claims 1, 2 or 3, **characterized by** a
production method comprising a grinding step which enables the particle size of the mixture to be processed into 10 to 90 microns.

5. An instant coffee according to any of Claims 1 to 4, **characterized by** a production method comprising an agglomeration step which is carried out at a temperature of 100° to 200°C under 50 to 150 kg/h steam.

6. An instant coffee according to any of the preceding claims which is soluble in water in an amount of 25% to 50% on dry matter when mixed with hot water.

7. An instant coffee according to any of the preceding claims, **characterized by** a flavoring substance comprising natural extracts, volatile oils, nature-identical flavoring substances used as flavoring agents, maltodextrin used as a carrier, thickener agents enabling binding together, milk powder, stabilizer which ensures stability of the mixture, emulsifying salt and anticaking agent.

8. An instant coffee according to Claim 7, **characterized by** an emulsifying salt which is provided in the flavoring substance and which is disodium phosphate.

9. An instant coffee according to Claim 7 or 8, **characterized by** an anticaking agent which is provided in the flavoring substance and which is silicon dioxide.

10. An instant coffee according to any of Claims 7 to 9, **characterized by** a flavoring substance which has Turkish delight flavor.

11. An instant coffee according to any of Claims 7 to 9, **characterized by** a flavoring substance which has mastic flavor.

12. An instant coffee according to any of Claims 7 to 9, **characterized by** a flavoring substance which has coconut flavor.

13. An instant coffee according to any of Claims 7 to 9, **characterized by** a flavoring substance which has almond flavor.

14. An instant coffee according to any of Claims 7 to 9, **characterized by** a flavoring substance which has hazelnut flavor.

15. An instant coffee according to any of Claims 7 to 9, **characterized by** a flavoring substance which has cardamom flavor.

16. An instant coffee according to any of Claims 7 to 9, **characterized by** a flavoring substance which has chocolate flavor.

17. An instant coffee according to any of Claims 7 to 9, **characterized by** a flavoring substance which has mint flavor.

18. An instant coffee according to any of Claims 7 to 9, **characterized by** a flavoring substance which has fruit flavors.

19. An instant coffee according to any of the preceding claims **characterized by** a foaming agent which enables the prepared coffee to be foamy and which is produced from coffee bean membrane.

20. An instant coffee according to any of the preceding claims **characterized by** 20% to 30% on dry matter of sugar.

## Patentansprüche

1. Ein Instantkaffee mit Kaffeemehl und Schaum, **gekennzeichnet durch** 65 % bis 97,5 % auf Trockenmasse von gerösteten und gemahlenen Kaffeebohnen und 2.0 % bis 2.5 % auf Trockenmasse des Geschmackstoffs und gewonnen **durch** ein Herstellungsverfahren umfassend die folgenden Schritte,
- Rösten der Kaffeebohnen
- Mischung von gerösteten Kaffeebohnen mit anderen Materialien
- Vermahlen der gewonnen Mischung,
- Anhäufen der gemahlenen Mischung,
- Trocknung der angehäuften Mischung und
- Kühlung der getrockneten Mischung.

2. Ein Herstellungsverfahren zur Gewinnung eines Instantkaffees gemäß Anspruch 1, umfassend die Schritte der Verpackung des gekühlten Pulvers in einem Stickstoffgas-Medium .

3. Ein Instantkaffee gemäß Anspruch 1 oder 2, **gekennzeichnet durch** ein Herstellungsverfahren umfassend einen Verpackungsschritt für Einwegverpackungen, welcher unter Stickstoffgas erfolgt.

4. Ein Instantkaffee gemäß Ansprüche 1, 2 oder 3, **gekennzeichnet durch** ein Herstellungsverfahren umfassend einen Vermahlungsschritt, der 10 bis 90 Mikrometers der Teilchengröße der zu bearbeitenden Mischung ermöglicht.

5. Ein Instantkaffee gemäß Anspruch 1 oder 4, **gekennzeichnet durch** ein Herstellungsverfahren umfassend einen Anhäufungsschritt, der in einer Temperatur von 100°C bis 200°C unter 50 bis 150 kg/h Dampf durchgeführt wird.

6. Ein Instantkaffee gemäß einem der vorangehenden Ansprüche, welcher in einer Menge von 2 % bis 50 % auf Trockenmasse im Wasser löslich ist, wenn mit heißem Wasser gemischt wird.

7. Ein Instantkaffee gemäß einem der vorangehenden Ansprüche, **gekennzeichnet durch** einen Geschmackstoff umfassend natürliche Extrakte, flüchtige Öle, natürliche identische Geschmackstoffe wie die als Aroma-Mittel eingesetzte Mittel, als Träger eingesetzter Maltodextrin, die Zusammenbindung ermöglichende Verdickungsmittel, Milchpulver, Stabilisatoren, welche die Stabilität der Mischung ermöglichen, emulgierendes Salz und Antibackmittel.

8. Ein Instantkaffee gemäß Anspruch 7, **gekennzeichnet durch** ein emulgierendes Salz, welches im Geschmacksstoff vorgesehen ist und welches DiNatrium Phosphat ist.

9. Ein Instantkaffee gemäß Anspruch 7 oder 8, **gekennzeichnet durch** ein Antibackmittel, welches im Geschmacksstoff vorgesehen ist und welches Silizium Dioxid ist.

10. Ein Instantkaffee gemäß einem der Ansprüche 7 bis 9, **gekennzeichnet durch** einen Geschmacksstoff, welcher das Aroma der Türkischen Süßigkeit aufweist.

11. Ein Instantkaffee gemäß einem der Ansprüche 7 bis 9, **gekennzeichnet durch** einen Geschmacksstoff, welcher Mastix-Aroma aufweist.

12. Ein Instantkaffee gemäß einem der Ansprüche 7 bis 9, **gekennzeichnet durch** einen Geschmacksstoff, welcher Kokosnussaroma aufweist.

13. Ein Instantkaffee gemäß einem der Ansprüche 7 bis 9, **gekennzeichnet durch** einen Geschmacksstoff, welcher Mandelaroma aufweist.

14. Ein Instantkaffee gemäß einem der Ansprüche 7 bis 9, **gekennzeichnet durch** einen Geschmacksstoff, welcher Haselnussaroma aufweist.

15. Ein Instantkaffee gemäß einem der Ansprüche 7 bis 9, **gekennzeichnet durch** einen Geschmacksstoff, welcher Kardamom-Aroma aufweist.

16. Ein Instantkaffee gemäß einem der Ansprüche 7 bis 9, **gekennzeichnet durch** einen Geschmacksstoff, welcher Schokoladenaroma aufweist.

17. Ein Instantkaffee gemäß einem der Ansprüche 7 bis 9, **gekennzeichnet durch** einen Geschmacksstoff, welcher Pfefferminzaroma aufweist.

18. Ein Instantkaffee gemäß einem der Ansprüche 7 bis 9, **gekennzeichnet durch** einen Geschmacksstoff, welcher Fruchtaroma aufweist.

19. Ein Instantkaffee gemäß einem der vorangehenden Ansprüche, **gekennzeichnet durch** einen Schaumbildner, der es ermöglicht, dass der vorbereitete Kaffee schäumend ist und welcher aus Kaffeebohnenmembran hergestellt wird.

20. Ein Instantkaffee gemäß einem der vorangehenden Ansprüche, **gekennzeichnet durch** 20 % bis 30 % auf Zucker-Trockenmasse.

## Revendications

1. Un café instantané aux marcs de café et à la mousse, **caractérisé par** de l'ordre de 65% à 97,5% du grain de café torréfié et moulu sur la matière sèche et de l'ordre de 2,0% à 2,5% sur la matière sèche de l'aromatisant et obtenu par une méthode de fabrication comportant les étapes suivantes:
- la torréfaction du grain de café,
- le mélange du grain de café torréfié avec des autres matières,
- le broyage du mélange obtenu,
- l'agglomération du mélange de grain de café,
- le séchage du mélange aggloméré, et
- le refroidissement du mélange séché.

2. Une méthode de fabrication pour obtenir un café instantané selon la revendication 1, comportant une phase d'emballage de la poudre refroidie dans un milieu d'azote gazeux.

3. Un café instantané selon la revendication 1 ou 2, **caractérisé par** une méthode de production comportant une tape d'emballage pour les paquets à usage unique réalisés sous l'azote gazeux.

4. Un café instantané selon les revendications 1, 2, ou 3, **caractérisé par** une méthode de production comportant une étape de broyage permettant à la taille de particule du mélange d'être transformée en 10 à 90 microns.

5. Un café instantané selon l'une quelconque des revendications 1 à 4, **caractérisé par** une méthode de fabrication comportant une étape d'agglomération réalisée à une température de l'ordre de 100 à 200°C sous la vapeur de l'ordre de 50 à 150 kg/.

6. Un café instantané selon l'une quelconque des revendications précédentes qui est soluble dans l'eau à une quantité de l'ordre de 25% à 50% sur la matière sèche quand on le mélange avec de l'eau chaude.

7. Un café instantané selon l'une quelconque des revendications précédentes, **caractérisé par** un aromatisant comportant des extraits naturels, huiles volatiles, substances aromatisants identiques aux naturelles utilisées comme agent aromatique, de la maltodextrine utilisée comme un porteur, des épaississants destinés à les lier, du lait en poutre, un stabilisant assurant la stabilité du mélange, du sel émulsifiant, et un anti-agglomérant.

8. Un café instantané selon la revendication 7, **caractérisé par** un sel émulsifiant fourni dans l'aromatisant et étant le phosphate disodique.

9. Un café instantané selon la revendication 7 ou 8, **caractérisé par** un anti-agglomérant fourni dans l'aromatisant et étant le dioxyde de silicium.

10. Un café instantané selon l'une quelconque des revendications 7 à 9, **caractérisé par** un aromatisant de saveur du loukoum turc.

11. Un café instantané selon l'une quelconque des revendications 7 à 9, **caractérisé par** un aromatisant de saveur lentistique.

12. Un café instantané selon l'une quelconque des revendications 7 à 9, **caractérisé par** un aromatisant de saveur de noix de coco.

13. Un café instantané selon l'une quelconque des revendications 7 à 9, **caractérisé par** un aromatisant de saveur d'amande.

14. Un café instantané selon l'une quelconque des revendications 7 à 9, **caractérisé par** un aromatisant de saveur de noisette.

15. Un café instantané selon l'une quelconque des revendications 7 à 9, **caractérisé par** un aromatisant de saveur de cardamome.

16. Un café instantané selon l'une quelconque des revendications 7 à 9, **caractérisé par** un aromatisant de saveur de noix de chocolat.

17. Un café instantané selon l'une quelconque des revendications 7 à 9, **caractérisé par** un aromatisant de saveur de noix de menthe.

18. Un café instantané selon l'une quelconque des revendications 7 à 9, **caractérisé par** un
aromatisant de saveurs de fruit.

19. Un café instantané selon l'une quelconque des revendications précédentes, **caractérisé par**
un agent moussant permettant au café préparé d'être mousseux et qui est produit de la membrane du grain de café.

20. Un café instantané selon l'une quelconque des revendications précédentes, **caractérisé par**
du sucre de l'ordre de 20% à 30% sur la matière sèche.
